# EUROPEAN PATENT APPLICATION

(11) **EP 4 309 985 A1**
(43) Date of publication of application: **24.01.2024**
(21) Application number: 22185486.2
(22) Date of filing: 18.07.2022
(51) Int. Cl.: B62K 25/02, F16B 21/16

(54) **A QUICK RELEASE SYSTEM FOR A WHEEL TO BE HELD BETWEEN TWO BLADES OF A FORK**

(71) Applicant: TAC SUD sprl, 5575 Gedinne (BE)
(72) Inventor: Vael, Hubert, 9100 Sint-Niklaas (BE)
(74) Representative: IP HILLS NV

(57) **Abstract**

A quick release system for a wheel to be held between two blades of a fork is provided. The system comprises a hollow axle adapted to be slid in the hub of a wheel, said axle having a first and a second outer end and a first outer end portion adjacent the first outer end and a first coupling means adapted to couple said system to a first of the two blades of the fork, the first coupling means having a cavity for receiving the first outer end portion of the hollow axle. At the first outer end portion of the hollow axle, at least one perforation is provided, at least one locking object is mounted inside the cavity of the hollow axle such that said locking object can extend partially and in radial direction through said at least one perforation. The system comprises a blocking means being provided inside said cavity of said axle, said blocking means being adapted to be operated from the second outer end of the axle moving the blocking means in axial direction, and adapted to force the at least one locking object in radial direction into said at least one perforation. The cavity of the first coupling means having a wall, said wall comprising a recess adapted to receive the part of the locking object extending through said at least one perforation in the axle.

## Description

### Field of the Invention

The present invention generally relates to quick release systems for holding a wheel between two blades of a fork, e.g. and in particularly of a human and/or electrically powered cycle.

### Background of the Invention

Bicycles already exists since the beginning of the nineteenth century. Bicycles holding one or more wheels between two blades of a fork hence are already well known in the art. During the decades following, wheels, originally being wooden or steel circular objects, were covered with rubber and later with tubes, to increase the comfort of the user. Since the end of the nineteenth century, inflatable tubes were used to cover the outer side of the wheels. Since this very same moment, the problem of tubes running flat because of perforations of the tube is known as well.

Tubes running flat are still a problem nowadays. Many efforts are taken to develop a system to quickly release a wheel when having a flat tire from the bicycle and change the wheel with a spare one provided with a properly inflated tube. In particular during cycling races nowadays, the speed of changing of a wheel, either a front wheel or a back (or rear) wheel, can even be decisive for the cyclist to win or lose the race. The sport team following the cyclist, or the cycling team, carries spare front and back wheels along. The bicycles are foreseen of a quick release system to dismount and mount a wheel as quick as possible, even within seconds.

As a mere example, US20190111733 shows such quick release system. As best visible in figure 8 of US20190111733, an axle is inserted through two orifices, one in each blade of the frame, the axle being blocked by a quick release system.

### Summary of the Invention

The present invention has an object to provide a quick release system having the system to be operatable from the proximal end of the quick release system only. Interventions to release the system at the opposite side of the axle are avoided. It is also an object to provide a quick release system avoiding the elements, locking the axle at the distal end to a blade of the frame, to be exposed to ambient conditions and danger, like mud, humidity, stones, etc. thereby blockage of the release system due to the presence of such ambient conditions is avoided to a large extent. It is also an object to provide a quick release system wherein the accidental release of one element of the quick release system does not cause the wheel to be separatable from the frame.

According to a first invention, a quick release system for a wheel to be held between two blades of a fork is provided. The system comprises a
- a hollow axle adapted to be slid in the hub of a wheel, said axle having a first and a second outer end and a first outer end portion adjacent the first outer end;
- a first coupling means adapted to couple said system to a first of the two blades of the fork, the first coupling means having a cavity for receiving the first outer end portion of the hollow axle;
- at the first outer end portion of the hollow axle, at least one perforation is provided, at least one locking object is mounted inside the cavity of the hollow axle such that said locking object can extend partially and in radial direction through said at least one perforation;
- a blocking means being provided inside said cavity of said axle, said blocking means being adapted to be operated from the second outer end of the axle moving the blocking means in axial direction, and adapted to force the at least one locking object in radial direction into said at least one perforation;
- said cavity of said first coupling means having a wall, said wall comprising a recess adapted to receive the part of the locking object extending through said at least one perforation in the axle.

The quick release system has its locking objects and blocking means inside the cavity of the hollow axle. These elements, whose ability to move may be relatively fragile and fine-tuned, are sheltered from the ambient and ambient conditions, like dirt, sand, and alike, during use of the quick release system. At the same time, the mounting and releasing activity to be performed by the user, like the cyclist or a mechanic, can be performed using only one hand, i.e. the hand present at the second coupling means. Hence a quick release system being relatively easy to handle, release and/or fasten by one hand is provided, while the blocking and locking elements and object are exposed relatively little to the ambient. Moving elements which would remain present in e.g. the first coupling means, or the blades of the fork, are open for contamination at least during the period the axle is not inserted or carried by e.g. the first coupling means or the blades of the fork. Such exposed moving elements are avoided.

An axle is an elongated volume, like a shaft. The axle being hollow means that at the inner side of the axle or shaft, a cavity is present extending in axial direction, possibly from the one end of the axle to the other end of the axle. A hollow axle hence may be a tubular element. The cavity provided all along the axis of the axle may be closed at the first outer end by a closing means, like a plug, or may be closed by a set screw which can be positioned in axial direction, e.g. by an outer screw thread and a cooperating inner screw thread in the first outer end of the axle. The cavity provided along the axis of the axle may end near the first outer end by a bottom wall. Optionally a perforation is provided thought the bottom wall, being adapted to allow a set screw to pass though said perforation and being screwed in the outer end of the rod near the first outer end of the axle. During the period the axle is inserted and carried by the first and second coupling means, the blocking and locking elements and object are protected from the ambient as well, as they are positioned inside the cavity of the axle and/or the cavity of the first coupling means.

The hollow axle has a first outer end, also referred to as distal end, and a first outer end portion adjacent the first outer end. The hollow axle has a first outer end, also referred to as distal end. The handling of the blocking means and the locking objects may be done by operating the quick release system from the proximal end of the axle, while actions need not necessarily to be taken at the distal end of the axle.

The quick release system may comprise one or more than one locking objects, like two locking objects, three or more locking objects, such as 4, 5, 6, 7, 8, 9, 10 or even more locking objects.

Though the locking elements may differ one from the other, all locking objects may preferably be identical.

In case of more than one locking objects, the locking objects may be positioned equidistant one from the other round the axis of the axle. In case of more than one locking objects, the locking objects may be positioned equiangular one to the other around the axis of the axle.

In case of more than one locking means, the locking means may all be positioned at the same position along the longitudinal direction of the axle, i.e. in the direction of the axis of the axle. Alternatively, the more than one locking means may comprise more than one group of one of more locking means, each group being positioned at a given longitudinal position along the axis of the axle, these positions being different for different groups. In this case, the wall comprises for each group of locking means a recess adapted to receive the part of the locking object extending through said at least one perforation in the axle. Though the recesses may differ one from the other, all recesses may preferably be identical. The recesses may be provided as parallel groves in the inner wall of the first coupling means.

At the first outer end portion of the hollow axle, at least one perforation is provided though the wall of the axle. In case of more than one locking means being provided, for each locking means a perforation is provided in the wall or shell of the axle. The position of the perforations corresponds to the positions of the locking means inside the cavity of the axle.

The locking objects and the perforations have shapes preventing the locking objects to be pushed completely through the perforation. The locking objects may have at at least one position along the direction in which they are inserted in the perforation, a cross section perpendicular to this insertion direction being larger than the smallest opening of the perforation.

When the hollow axle is inserted though the central opening of the hub of a wheel, into the cavity of the first coupling means, the blocking means may be moved in axial direction of the axle, thereby forcing the at least one locking object in radial direction into and partially through the corresponding perforation, into the recess adapted to receive the part of the locking object, e.g. a ball, extending through this perforation in the axle.

According to some embodiments, the locking object may be a ball.

The quick release system may comprise one or more than one ball, such as two balls, three or more balls, e.g.4, 5, 6, 7, 8, 9, 10 or even more balls.

In case of more than one ball, the balls may be positioned equidistant one from the other round the axis of the axle. In case of more than one ball, the balls may be positioned equiangular one to the other around the axis of the axle.

Possibly, in case of a plurality of balls being provided, the balls may have mutually identical or different diameters. Preferably though all balls are identical..

In general, the perforation or perforations in the axle may be cylindrical perforations. Optionally, and in particularly when balls are used as locking objects, the perforations may be tapered or countersunk perforations, the smallest diameter located on the outer surface of the axle. Optionally, and also in particularly when balls are used as locking objects, the perforations may have the form of a spherical segment, the smallest diameter located on the outer surface of the axle. In the latter case, the radius of the spherical segment is preferably substantially identical to the radius of the ball used as locking object.

Preferably, the diameter of the balls is chosen in the range 2 mm to 15 mm, such as in the range 2 mm to 5 mm, e.g. 3 or 4mm.

Preferably the diameter of the perforations, and at least the smallest diameter in case of varying diameters in the direction perpendicularly to the axis of the axle, is less than the diameter of the ball or balls used. Most preferred, the diameter of the perforations, and at least the smallest diameter in case of varying diameters in the direction perpendicularly to the axis of the axle, is less than 80% of the diameter of the ball or balls used. The angle between the tangent plane at the point where the edge of the perforation contacts the surface of the ball, and the tangent plane of the top of the ball, is less than or equal to 55°, more preferred 45° or less. Preferably the diameter of the perforation and the diameter of the balls are chosen, such that the balls extend at least 0.2 mm out of the perforation, more preferred at least 0.5 mm, and this preferably while the angle between the tangent plane at the point where the edge of the perforation contacts the surface of the ball, and the tangent plane of the top of the ball, is less than or equal to 45°.

Preferably the diameter of the perforations, and at least the smallest diameter in case of varying diameters in the direction perpendicularly to the axis of the axle, is chosen in the range of 1.4 mm to 12.3 mm, such as in the range 1.4 mm to 4.1 mm.

As alternatives for balls being used as locking objects, other locking objects with outer shapes may be used, which shape has at two opposite sides, a rounded end, possibly being truncated. Other suitable shapes are e.g. capsule shapes, ellipsoids, almond shapes, or ovals or alike. Preferably the part of the locking means extending at maximum through the perforation, has tangential lines being non perpendicular to the axis of the axle. Hence the part extending through the perforation is preferably a rounded part, like a spherical or elliptic cap or segment.

The locking means may be provided from any suitable material, like metal, like aluminium, titanium, copper, brass, steel, stainless steel, ceramic material, polymer, polymer composite, carbon reinforced polymer, and alike.

Locking objects being balls or locking objects with outer shapes having at two opposite sides a rounded end, may be provided from polymer, glass, metal, like aluminium, titanium, copper, brass, steel, stainless steel, ceramic material, and alike. Most preferred hardened steel locking objects are used, such as 40steel.

According to some embodiments of the present invention, the radial cross section of the recess in the wall of the cavity of the first coupling means, sectioned according to a plane parallel and comprising the axis of the axle, may have the shape of a circle segment.

In particularly in case the locking objects are balls, this section of the recess has the shape of a circle segment.

The diameter of the circle segment preferably has a diameter substantially equal to the diameter of the ball being the locking object. The depth of this circle segment, called the sagitta, preferably equals the height of the section of the ball extending beyond the axle outer surface.

The first connecting means may have the form of a cup, having an upstanding inner wall, being the wall comprising a recess adapted to receive the part of the locking object extending through said at least one perforation in the axle, and a bottom wall, closing the cavity. On the outer side of the first connecting means, a screw thread may be provided, for cooperating with a thread on the first blade of the fork. The first connecting means is coupled to the blade by screwing the first connecting means in an opening in the blade, the opening being provided with said cooperating thread.

According to some embodiments, the quick release system comprises a second coupling means adapted to couple the system to a second of the two blades of the fork, the second coupling means having an orifice for passing the hollow axle through the second coupling means.

The hollow axle may be inserted in the orifice of the second coupling means. When the hollow axle is inserted in the orifice of the second coupling mean, though the central opening of the hub of a wheel, and into the cavity of the first coupling means, the blocking means may be moved in axial direction of the axle, thereby forcing the at least one locking object in radial direction into and partially through the corresponding perforation, into the recess adapted to receive the part of the locking object, e.g. a ball, extending through this perforation in the axle.

As such, the axle is positioned and may be fixed in the hub between the two blades of the fork of the bicycle. The elements actually causing the axle to be firmly coupled to the frame, are sheltered from dirt, mud or any other external elements which may cause the release to be hindered or disturbed.

Preferably the wall of the cavity of the first coupling means, which comprises the recess to receive the locking object or objects, is non-perpendicularly oriented to the axis of the axle. The perimeter of the cavity may correspond and be substantially identical, e.g. identical, to the outer radial cross section of the axle at the first outer end portion.

The first and/or second coupling means may be provided from metal, like aluminium, titanium, copper, brass, steel or stainless steel, ceramic material, polymer, reinforced polymer, carbon reinforced polymer, and alike. Most preferred hardened steel coupling means are used, such as from 40steel.

The wall of the orifice of the second coupling means may be substantially parallel to the axis of the axle. This wall being parallel to the axis of the axle means that the section line of the wall, obtained by sectioning the wall with any of the panes in which the axis of the axle lies, is parallel to the axis of the axle. Substantially parallel means that the angle between the section line of the wall, obtained by sectioning the wall with any of the panes in which the axis of the axle lies, and the axis of the axle is within normal tolerances, such as between 0° - meaning parallel - and 0.5°.

The quick release system may comprise a second coupling means (15) adapted to couple said system to the second (36) of the two blades of the fork, the second coupling means has an opening, preferably a central opening, adapted to receive and allow a part of the hollow axle to pass though this opening. The hollow axle may pass though this opening, though the central opening of the hub of a wheel, into the cavity of the first coupling means.

According to some embodiments, the second coupling means may comprise a first portion extending inside the fork of the bicycle.

The second coupling means may comprise a first portion extending inside the fork of the bicycle, said first portion carrying a cassette .

Optionally the second coupling means may be provided with a portion extending inside the fork of the bicycle. This portion extending inside the fork and carry the cassette of the bicycle. The cassette is the system of one or usually a plurality of cogs of the derailleur of the bicycle. This cassette may be freely rotating round this portion extending inside the fork by providing appropriate bearings.

The cassette may comprise a connection means to allow the cassette to connect to a wheel positioned on a hub.

The inner side of the cassette may contact the hub of the wheel. A connection allowing, when closed, rotation forwards rotation of the hub along with the cassette, and hence the wheel, while allowing reverse relative movement from the cassette and the hub, may be provided. As an example, this connection may comprise rachet wheel cooperating with engaging dents or pawls.

The closing of the connection between cassette and hub, may be obtained by a clamping force applied to the two blades of the fork between which the wheel is to be rotatably mounted. This clamping force may be provided by a cam, e.g. by closing an eccentric cam clamping lever of the release means.

The second coupling means may comprise a shifting means to shift the position of the second coupling means in axial direction of the axle in view of the second blade.

Alternatively, the second coupling means may be provided with a shifting means to shift the position of the coupling means in axial direction of the axle in view of the second blade. As an example, the second coupling means may be provided with a screw thread, cooperating with a tread in the second blade. By rotating the second coupling means, the position of the second coupling means may shift in axial direction of the axle. As such the connection may be closed or opened. The second coupling means may be rotated, hence shifted, by rotating the second coupling means by means of the arm of the eccentric cam clamping lever of the release means around the axis of the axle. Depending on the pitch of the screw thread, a sufficient axial shift may be obtained by rotating the eccentric cam clamping lever of the release means over a quarter, half or one turn. This rotation of the second coupling means may be provided by the provision of a non-circular axle, whose rotation cause the second coupling means to rotate along, hence, to shift in axial direction due to the presence oof the cooperating threads. The circumference of the orifice in the second coupling means correspond to the outer radial cross section of the axle.

This shifting may also be obtained by using the quick release system in combination with a fork where the two blades are brought under a tension inwards the fork when the quick release system is inserted through a wheel between the blades, and in the first and second coupling means, the wheel being fixed. The mere fact of opening the quick release system, will cause the first and second coupling means to be discarded to some extent by the removal of the tension inwards the fork by the blades, thereby shifting the position of the coupling means in axial direction of the axle in view of the second blade.

The second coupling means may comprise a screw thread adapted for cooperating with a tread in the second blade, the second coupling means adapted to be rotated by rotating the axle, the axle having a non-circular radial cross section.

This portion extending inside the fork and carry the cassette of the bicycle allows to replace the hub and the connected wheel, e.g. connected by means of the spokes only. Optionally also the disc of the disc brake 38 may be connected to and being part of the hub. This allows the same wheel to be used as a spare front wheel or back wheel.

Hence in situations where time needed for changing a wheel is crucial, e.g. in cycling competition, the user, e.g. the cyclist or the mechanician, only needs one consider using only one type of wheels and cannot make mistakes by providing the wrong kind of wheel. The staff following a cycling competition only needs to carry along one type of wheel, which may reduce the number of wheels to be carried. In case the same number of spare wheels are carried along, more changes of either front or back wheels may be carried out, since no two types of wheels are to be carried along.

The second coupling means may be provided from any suitable material, like metal, like aluminium, titanium, copper, brass, steel, stainless steel, ceramic material, polymer, polymer composite, carbon reinforced polymer, and alike. Aluminium or steel is preferred.

The blocking means may comprise a rod positioned in the cavity of the axle and extending from the first outer end portion adjacent the first outer end to beyond the second end of the axle. Preferably the rod is positioned coaxially with the axle. The rod extending beyond the second outer end of the axle provided the opportunity to operate the rod, hence the blocking means from the second outer end of the axle. The rod may be provided with a button or bulge present at the outer end of the rod adjacent the second coupling means to push or pull the rod in axial direction into and from the cavity of the hollow axle. The button or bulge may be removably connected to the rod, e.g. by an external screw thread on the rod, cooperating with as screw thread in a cavity in the button or bulge.

The blocking means may comprise a rod positioned in the cavity of the axle and extending from the first outer end portion beyond the second end of the axle, said rod, at the first outer portion of the axle, having at least a first outwards inclined surface portion adapted to push the locking object outwards the cavity of the axle into the perforation when said rod is moved in axial direction relative to the axle.

The rod may have a radial outer cross section along its axis, optionally similar along the axis, being, as an example, circular, oval, teardrop-shaped, polygonal, like regularly polygonal, like triangular, e.g. regular triangular, quadrangular, like regular quadrangular, e.g. rectangular, diamond shaped, parallelogrammical, trapezoid, square, pentagonal, like regular pentagonal, hexagonal, like regular hexagonal, heptagonal, like regular heptagonal, and alike. Similar along the axis means that the form of the cross section is identical, the dimensions of the form varying along the axis of the rod.

Preferably the rod has a radial outer cross section being similar to the radial inner cross section of the axle. The distance between the radial outer cross section of the rod and to the radial inner cross section of the axle may vary along the axis of the rod. At at least one position along the axis of the rod, the distance between the radial outer cross section of the rod and to the radial inner cross section of the axle is less than the height of the locking objects minus the wall thickness of the axle. This is at least along one position at the part of the outer surface of the rod, which part has a first outwards inclined surface section. At at least one other position along the axis of the rod, the distance between the radial outer cross section of the rod and to the radial inner cross section of the axle is equal or more than the height of the locking objects minus the wall thickness of the axle. This is at least along one position at a part of the outer surface of the rod, which part is adjacent the first outwards inclined surface portion, at the side of the top of the outwards inclined surface portion.

The inclination may be defined by an inclination angle. This inclination angle may be less than or equal to 90°. An inclination angle of 90° means that the flank or surface is perpendicular the axis of the rod. Preferably the inclination angle may be less than or equal to 70°, e.g. in a range of about 0° up to 90° such as in a range of about 0° up to 70°, such as in the range of 5° to 70°, e.g. in the range of 5° to 40°, most preferably in the range of 20° to 30°. The inclination angle is the smallest angle measurable between the inclined surface and the axis of the rod.

The rod may be provided from any suitable material, like metal, steel, stainless steel, ceramic material, polymer, polymer composite, carbon reinforced polymer, and alike. Most preferred hardened steel rods are used, such as from 40steel or steel harder than 40steel.

The axial length of the rod, i.e. the distance between the two outer ends, is preferably chosen such that, once mounted, the rod extends beyond the second outer end of the axle. The rod, extending beyond the second outer end of the axle, may preferably extend over a length in the range of 2mm to 15mm, such as in the range of 4 to 10mm, e.g. 5mm, 6mm, 7mm, 8mm or 9mm. The length over which the rod can move in axial direction in the axle, is preferably in the range of 4mm to 10mm, such as 5mm, 6mm, 7mm, 8mm or 9mm.

The quick release system comprises a second coupling means adapted to couple said system to the second of the two blades of the fork, the second coupling means having an opening adapted to receive and allow a part of the hollow axle to pass though this opening. The second outer end of the axle may be located inside the outer end of this second coupling means or being flush with the outer end of this second coupling means. The part of the rod extending outside the second outer end of the axle, may be located partially or fully sunken in a recess at the outer end of this second coupling means.

This rod, at the first outer portion of the axle, may have at least one part of the outer surface, having an outwards inclined surface portion. This means that along at at least a part of the axis of the rod, the distance from the outer surface of the rod to the axis of the rod gradually extends in said direction along the axis of the rod.

As an example, the rod may have a substantially uniform cross section along its axis, except in its part at the first outer portion of the axle, where a rod portion is provided having said outwards inclined surface, hereafter referred to as inclined surface portion. As an example, an indentation may be provided, the inclined surface portion providing one side of the indentation. The second side of the indentation may be a second inclined surface portion oppositely inclined to the first inclined surface portion, or a side substantially perpendicular to the axis of the rod. Between the first and second side of the indentation, a rod portion with reduced thickness, i.e. reduced distance between rod surface and rod axis may be provided.

The axial moving of the rod in the cavity of the hollow axle in longitudinal, i.e. axial direction, is adapted to cause the locking object to be pushed outwards the cavity of the axle into the perforation, by the contact made between the locking object and the inclined surface. This when the rod is longitudinally moved in a sense towards the top of the inclined surface, i.e. the position where ethe inclined surface has the smallest radial dimension.

The indentation is adapted to receive the locking object, e.g. the ball, such the locking object, e.g. the ball, does not extend through the perforation in the hollow axle. Hence the locking object, e.g. the ball, may be embedded in the cavity of the hollow axle when the rod is positioned in view of the hollow axle such that the position of the locking object, e.g. ball, coincide with the position of the indentation in the rod.

As another example, the rod may have an inclined surface portion, adjacent a portion of the rod, having a cross section substantially equal to the section at the foot of the inclined surface portion. As such, the rod may have a conoid portion, preferably a conoid outer end, at the first outer portion of the axle. Conoid means that the distance from the outer surface of the rod to the axis of the rod gradually extends in a direction along the axis of the rod. The outer surface of this rod section hence is conoid. The outer surface of the rod is adapted to force the at least one locking object, like a ball, in radial direction into said at least one perforation of the axle, when the rod is moved in a direction of the axle of the rod, in a sense towards the top of the conoid shaped outer surface.

The portion of the rod, having a cross section substantially equal to the section at the foot of the inclined surface portion is adapted to receive the locking object, e.g. the ball, such the locking object, e.g. the ball does not extend through the perforation in the hollow axle. Hence the locking object, e.g. the ball, may be embedded in the cavity of the hollow axle when the rod is positioned in view of the hollow axle such that the position of the locking object o, e.g. ball, coincide with the portion of the rod, having a cross section substantially equal to the section at the foot of the inclined surface portion.

Preferably the rod is a cylindrical rod, having a circular diameter when sectioned radially. The inclined surface of the inclined surface portion, e.g. from a conoid portion of the indentation, forces the at least one locking object, like a ball, in radial direction into said at least one perforation of the axle when the rod is moved in a direction of the axle of the rod, in a sense towards the top of the conoid shaped outer surface.

Possibly, the rod comprises one or a plurality of protrusions, each protrusion fitting in an axially oriented recess at the inner wall of the inner cavity of the axle. The protrusion may be slidingly engaging the axle in said recess. This not only prevents turning of the rod in the axle, but it may also serve to guide the axial movement of the rod in the axle. Ion case of a plurality of protrusions, these protrusions may be equiangularly distributed around the axis of the rod.

As an example, the rod may have one or more fins, being inclined surface portions having the shape of a right-angled triangular volume, the right angle and one of the tops of the triangular volume oriented towards the axis of the rod, such that the inclined side of the triangular volume is adapted to force the at least one locking object, like a ball, in radial direction into said at least one perforation of the axle, when the rod is moved in a direction of the axle of the rod, in a sense towards the one of the tops of the triangular volume oriented towards the axis of the rod.

As such, the rod may have one or more fins, at the first outer portion of the axle. The distance from the outer surface of the rod to the axis of the rod gradually extends in a direction along the axis of the rod along the fins.

The portion of the rod, having a cross section substantially equal to the section at the foot of the fins is adapted to receive the locking object, e.g. the ball, such the locking object, e.g. the ball does not extend through the perforation in the hollow axle. Hence the locking object, e.g. the ball, may be embedded in the cavity of the hollow axle when the rod is positioned in view of the hollow axle such that the position of the locking object o, e.g. ball, coincide with the portion of the rod, having a cross section substantially equal to the section at the foot of the inclined surface portion.

The radial outer ends of the fins may be slidingly moveable in a recess in the inner surface of the cavity of the axle. As an example, two identical but mutually radially opposed fins are provided at the same axial position along the axis of the rod. Each of the fins is adapted to adapted to force the at least one locking object of two locking elements, like a ball, in radial direction into the at least one of two perforation of the axle, when the rod is moved in a direction of the axle of the rod, in a sense towards the one of the tops of the triangular volume oriented towards the axis of the rod. The inclination of the fins may be defined by an inclination angle being less than or equal to 90°, possibly being less than or equal to 70°, e.g. in a range of about 0° up to 70°, such as in the range of 5° to 70°, e.g. in the range of 5° to 40°, most preferably in the range of 20° to 30°.

In general, the dimensions of the locking object, e.g. balls, the wall thickness of the hollow axle and the thickness of the rod at the thickest and smallest diameter, are chosen such that the locking object is pushed in the opening of the axle when the locking object is positioned, in axial direction of the rod, at the highest point of, or adjacent at the same hight of the highest point of the inclined surface portion.

When the rod is positioned such that the locking object is raised in axial direction, i.e. the locking object, e.g. the ball, contacts the rod, in axial direction of the rod, at the highest point of, or adjacent at the same hight of the highest point of the inclined surface portion, the locking object should extend beyond the outer surface of the axle. The axial dimension of the locking object, e.g. the diameter of the balls when balls are used as locking objects, preferably in that case is larger than or equal to the thickness of the wall of the axle plus the spacing between the rod at the highest point of the inclined surface portion and the inner side of the cavity of the hollow axle.

The diameter of the inner cavity of the hollow axle may be about identical to the largest diameter of the inclined surface portion of the rod. The axial dimension of the locking object, e.g. the diameter of the balls when balls are used as locking objects, preferably in that case is larger than the thickness of the wall of the axle.

In axial direction the locking object may extend at least about 0.2 mm out of the perforation, more preferred at least 0.5 mm, when the rod is positioned such that the locking object is raised in axial direction, i.e. the locking object, e.g. the ball, contacts the rod, in axial direction of the rod, at the highest point of, or adjacent at the same hight of the highest point of the inclined surface portion.

When the rod is positioned such that the locking object is not raised in axial direction, i.e. the locking object, e.g. the ball, contacts the rod, in axial direction of the rod, at the lowest point of, or adjacent at the same hight of the lowest point of the inclined surface portion, the locking object should not extend beyond the outer surface of the axle. The axial dimension of the locking object, e.g. the diameter of the balls when balls are used as locking objects, preferably in that case is smaller than or equal to the thickness of the wall of the axle plus half of the diameter of the rod at the lowest point of the inclined surface portion. The difference between the inner radius of the cavity of the axle and the radius of the rod at the lowest point of the inclined surface portion, is preferably less than the axial dimension of the locking object, e.g. the diameter of the balls when balls are used as locking objects, and is most preferably less than or equal to 70% of the axial dimension of the locking object, e.g. the diameter of the balls when balls are used as locking objects.

So according to some embodiments the rod has a first portion , the first portion of the rod being connected to the top of the inclined surface portion and having the same radial cross section of the inclined surface portion at the top of the inclined surface portion.

When reference is made to a radial cross section of a section of a rod, and unless otherwise explicitly defined, this radial cross section is made by sectioning the object with a plane perpendicular to the axis of the rod.

The first portion may extend up to or even beyond the second outer end of the axle.

Alternatively the rod may have a second portion adjacent the first portion towards the second end of the axle, which second portion has a radial cross section wider than the inclined surface portion at the top of the inclined surface portion.

Between the first and second portion, a second inclined surface portion may be provided, having the same radial cross section as the first portion at the top of the second inclined surface portion and having the same radial cross section as the second portion at the foot of the second inclined surface portion. As such a depression in a rod may be provided. The axial length of the first may be at least the width of the locking object, e.g. the diameter of the ball when a ball is used as locking object.

Between the first and second portion, a substantially radial wall may be provided.

Alternatively the rod comprises two mutually opposed inclined surface portions, the tops of the inclined surface portions being coupled one to the other. as such a rod with a V-shaped depression may be provided.

The rod may have a further portion, the further portion of the rod being connected to the foot of the first inclined surface portion and having the same radial cross section as the first inclined surface portion at the foot of the first inclined surface portion. This further portion may provide the distal end of the rod.

The quick release system may comprise a pretensioning means adapted to move the blocking means to the position in which the blocking means forces the at least one locking object in radial direction into said at least one perforation.

The pretensioning means may be adapted to exercise its force to e.g. a rod being part of the blocking means. Preferably the quick release system comprises a pretensioning means, i.e. a means to exercise a force in axial direction to the end of the rod, like a spring, forcing the rod in a direction of the axle of the rod, in a sense towards the top of the inclined surface portion, i.e. towards the side of the inclined surface portion where the distance between surface and axis is minimal.

The top of the inclined surface portion may be oriented towards the first coupling means, though preferably the top of the inclined surface portion is oriented away from the first coupling means.

In the latter case, the pretensioning means, like a spring, may be positioned axially at the end of the rod, between the end of the rod and the inner surface of the orifice of the first coupling means. Preferably the end of the rod is provided by the largest cross section of the inclined surface portion. The spring may be connected at one end to the outer end of the rod, and when the axle is inserted in the first coupling means, the springs other end may be contacting the inner side of the cavity in the first contacting means.

The spring may be a compression spring like a helical compression spring, though other kinds of springs may be used, e.g. concave springs, conical springs barrel springs, hourglass springs variable pitch springs, magazine springs, and alike. Also other means to exercise a force in axial direction to the end of the rod may be used. Also more than one spring may be used for forcing the rod in a direction of the axle of the rod, in a sense towards the top of the inclined surface portion. The spring may preferably a metal spring, like a spring made from spring metal, like spring stainless steel. Also other springy, resilient materials may be used like natural or synthetic rubbers, resilient polymers and alike. Even resilient bellows may be used. A spring from spring steel is however preferred. The length of the spring may vary but is preferably chosen between 7.5mm and 15mm, e.g.;. between 8 and 12mm.

The pretensioning means, like the spring, may at least partially be encased in the cavity of the axle at the first outer portion of the axle.

The axle may have a uniform outer radial cross section along its axis.

The axle may have an outer radial cross section along its axis, optionally uniform or identical along the axis, being, as an example, circular, oval, teardrop-shaped, polygonal, like regularly polygonal, like triangular, e.g. regular triangular, quadrangular, like regular quadrangular, e.g. rectangular, diamond shaped, parallelogrammical, trapezoid, square, pentagonal, like regular pentagonal, hexagonal, like regular hexagonal, heptagonal, like regular heptagonal, and alike. In case the outer radial cross section has one or more straight sides, the perforations for receiving a locking object, like a ball, may be positioned along some of these straight sides, e.g. one perforation along each straight side. In case the outer radial cross section has one or more straight sides, the perforations for receiving a locking object, like a ball, may be positioned along some or all of these straight sides, in the middle of the straight side.

The axle may have an inner radial cross section along its axis, optionally uniform or identical along the axis, which may be similar in form to the outer radial cross section, though in dimension smaller. The inner and outer radial cross section is provided by a wall, having a thickness, which thickness may preferably be at least 30% of the diameter of the balls. The thickness may preferably be less than or equal to 70% of the diameter of the balls.

Preferably the diameter of the smallest circle encompassing the form of the outer radial cross section of the axle is less than or equal to 25mm , e.g. less than or equal to 20 mm.

The axial length of the axle, i.e. the distance between the two outer ends, may range from 0.7 to 3 times, like 0.8 to 3 times the distance between the outer sides of the blades of the fork. The axial length of the axle is preferably 1.1 to 1.5 times the distance between the outer sides of the blades of the fork for back wheels. The axial length of the axle is preferably 0.7 to 1.2 times the distance between the outer sides of the blades of the fork for front wheels. The same axial length may be used for front and back wheels of one and the same bicycle. The axial length of the axle may be between 80mm and 150mm, e.g. between 95mm and 145mm, e.g. 100mmm, 110mm, 135mm or 145mm.

The axle may be provided from any suitable material, like metal, like aluminium, titanium, copper, brass, steel, stainless steel, polymer, ceramic material, polymer composite, carbon reinforced polymer, and alike. Most preferred hardened steel axles are used, such as 40steel axles.

The quick release system may comprise a retention means adapted to retain the axle in the first and optionally the second coupling means once inserted. The retention means may comprise an eccentric cam clamping lever.

The quick release system may comprise a retention means to retain the axle in the first and second coupling means once inserted. The retention means may comprise an eccentric cam clamping lever. The rod may be coupled to this eccentric cam clamping lever, causing the rod to be pulled in an axial direction of the axle, in a sense from the first coupling means to the second coupling means, while the eccentric cam pushes against the second coupling means in an axial direction of the axle, in a sense from the second coupling means to the first coupling means. the rod is coupled to the eccentric cam clamping lever at the fulcrum of the lever, i.e. the rotating point of the lever. The rod may be pulled towards the second end of the axle when the eccentric cam clamping lever is closed, i.e. the eccentric part exercising a pushing force. The rod, having appropriate means to force the locking objects in the perforations, may as such be brought in a position that the blocking means forces the locking objects in the perforations.

While the hollow axle being inserted in the orifice of the second retention mean, though the central opening of the hub of a wheel, and into the cavity of the first coupling means, the blocking means being moved in axial direction thereby forcing the at least one locking object in radial direction into and partially through the corresponding perforation, into the recess adapted to receive the part of the locking object extending through said at least one perforation in the axle, the force forcing the at least one locking object in radial direction through the corresponding perforation into the recess is increased when the eccentric cam pushes against the second coupling means. this cam exercises a force on the rod in a direction and sense front he first coupling means to the second coupling means. as the locking means are strongly forces into the recesses, the axle cannot move in this sense. As such, the axle is positioned and may be fixed in the hub between the two blades of the fork of the bicycle.

When the eccentric cam clamping lever is released, the force exercised on the rod is decreased, the blocking means may still be forced in axial direction from the first to the second coupling means, e.g. by the means to exercise a force in axial direction to the end of the rod, e.g. a spring, thereby forcing the at least one locking object in radial direction into and partially through the corresponding perforation, into the recess adapted to receive the part of the locking object extending through said at least one perforation in the axle. Hence the release of the eccentric cam clamping lever may not be sufficient to release the axle from the first coupling means. When the rod is pushed in a direction from the second to the first coupling means, the locking objects may be released and cease to extend from the axle's perforation or perforations. As an example, the spring forcing the blocking means in axial direction from the first to the second coupling means, may be compressed by this pushing action.

The eccentric cam clamping lever may be provided from any suitable material, like metal, like aluminium, titanium, copper, brass, steel, stainless steel, ceramic material, polymer, polymer composite, carbon reinforced polymer, and alike. Aluminium or polymer is preferred.

Hence according to some embodiments, a quick release system may comprise
- the blocking means comprises a rod positioned in the cavity of the axle and extending from the first outer end portion adjacent the first outer end to beyond the second end of the axle, the rod, at the first outer portion of the axle, has at least a first outwards inclined surface portion adapted to push the locking object outwards the cavity of the axle into the perforation, said rod comprising a bulge (present at the outer end of the rod adjacent the second coupling means to push or pull the rod in axial direction into and from the cavity of the hollow axle);
- the quick release system comprises a pretensioning means adapted to move the rod axially to the position in which the first outwards inclined surface portion push the locking object outwards the cavity of the axle into the perforation.

The quick release system comprises a retention means adapted to retain the axle in the first and second coupling means once inserted, said retention means comprises an eccentric cam clamping lever, the rod being coupled to the eccentric cam clamping lever at the fulcrum of the lever, the eccentric cam clamping lever, in closed position, keeping the rod axially in the position in which the first outwards inclined surface portion push the locking object outwards the cavity of the axle into the perforation. This provides a more secure quick release system for a bicycle wheels, as one single accidental handling of the eccentric cam clamping lever will not release the axle, hence the bicycle wheel being decoupled. A sequence of actions is needed to release the wheel from the frame, by extracting the axle from the hub.

To quickly release and mount a wheel, there is only manipulation at one side of the bicycle needed. In situations where time needed for changing a wheel is crucial, e.g. in cycling competition, the user, e.g. the cyclist or the mechanician, only needs one hand to release the wheel, while the other may hold the frame still, or can be used to grip a spare wheel already.

According to a second aspect of the invention, a quick release system according to the first aspect of the invention is used to hold a wheel in a frame of a human and/or electrically powered cycle.

The quick release system may hold a front wheel and/or a rear wheel, the latter also referred to as back wheel.

The quick release system may hold a front wheel and/or a rear wheel of human, animal, electrically, pneumatically, liquid or thermically driven vehicles.

The quick release system may hold a front wheel and/or a rear wheel of bicycle, tricycle or alike.

The quick release system may hold a front wheel and/or a rear wheel of an e-bike, a road bike, a mountain bike, a touring bike, a folding bike, a fixed gear bike a track bike, a BMX, a recumbent bike, a cruiser, a hybrid bike, a cyclocross bike, a racing bike, and alike.

The quick release system may hold a front wheel and/or a rear wheel of a women's bike, men's bike, children's bike, tandem, cargo bike, and alike.

The quick release system may be used to hold wheels of airplanes, cars, trucks, trailers, caravans, mobile homes and alike.

### Brief Description of the Drawings

Fig. 1 illustrates schematically a quick release system according to the invention with a wheel mounted in closed status.
Fig. 2 illustrates schematically the quick release system of figure 1 with a wheel removed, hence in opened status.
Fig. 3 illustrates schematically the quick release system of figure 1 and 2 in an exploded view.
Fig. 4a and 4b schematically show the details of the quick release system of figure 1 in closed status (figure 3a) and in opened status (figure 3b), without the wheel being displayed.
Fig. 5 shows schematically an exploded view of the quick release system of figure 4a and 4b .
Fig. 6a and 6b schematically show details of an alternative quick release system according to the invention in closed status (figure 6a) and in opened status (figure 6b).
Fig. 7 shows schematically an exploded view of the quick release system of figure 6a and 6b.
Fig. 8a illustrates schematically an alternative quick release system according to the invention with a wheel being removed, fig. 8b showing the elements of this quick release system with removed wheel in exploded view.
Fig. 9 shows a schematical view an exploded view of another alternative quick release system according to the invention.

In the different figures, the same reference signs refer to the same or a similar feature.

### Detailed Description of Embodiment(s)

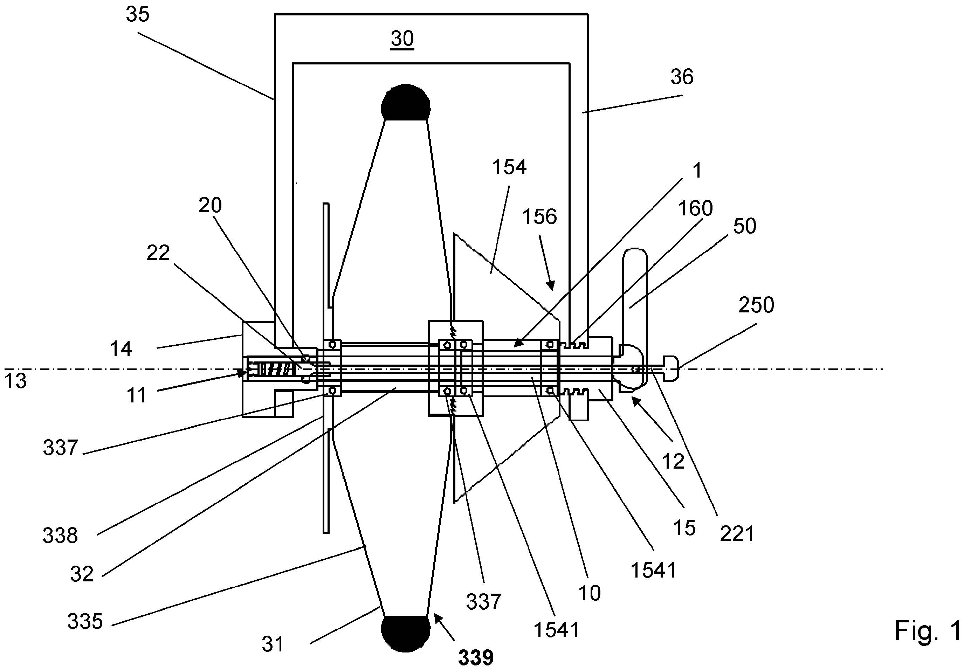

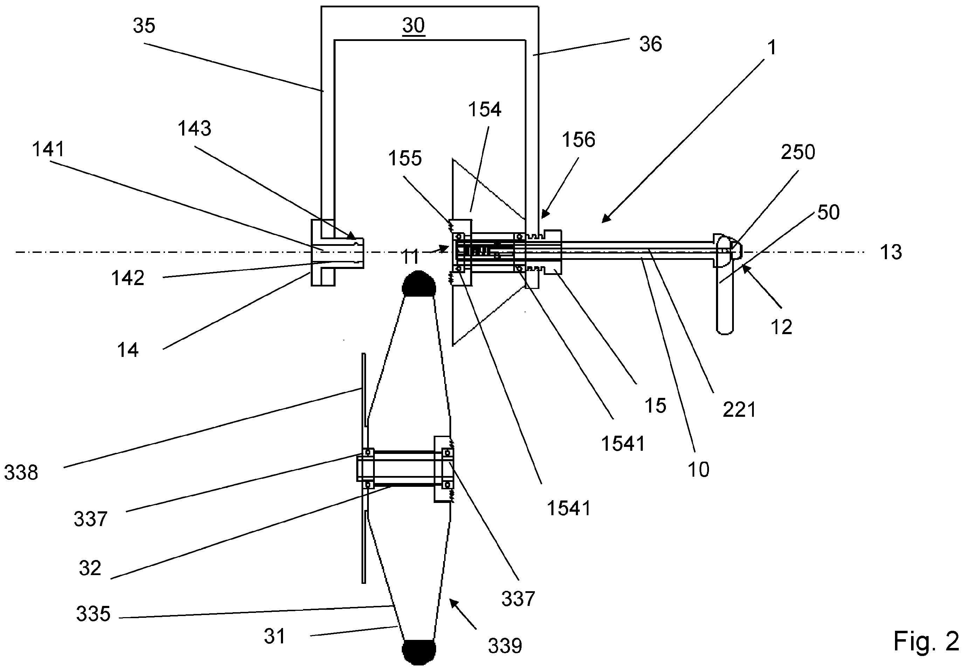

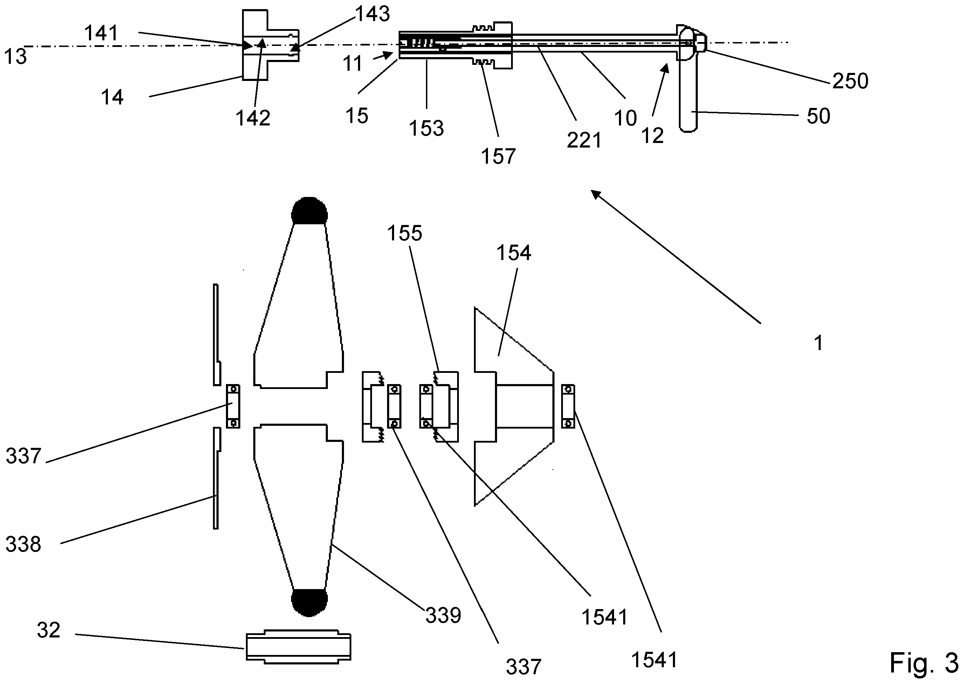

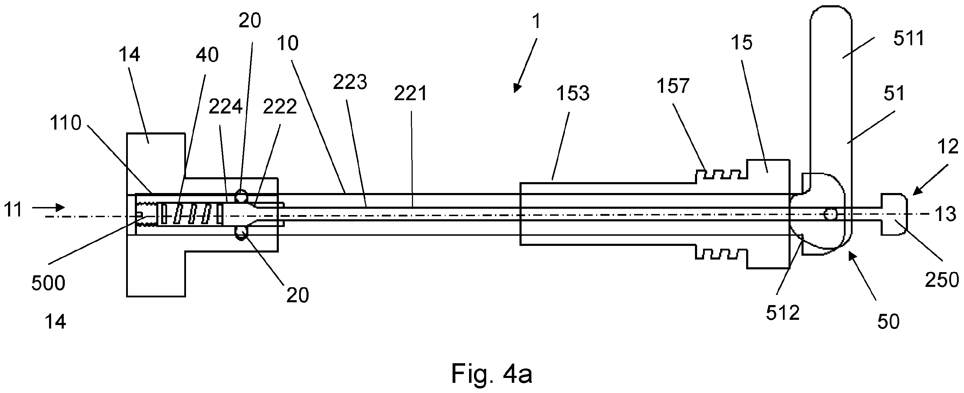

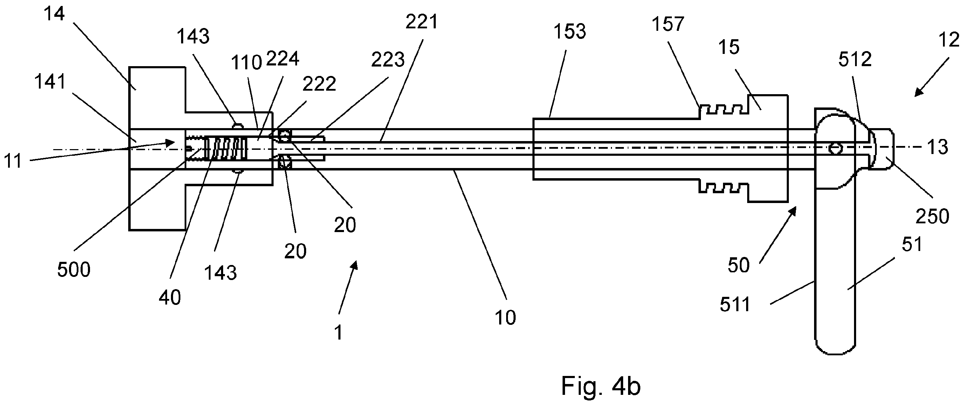

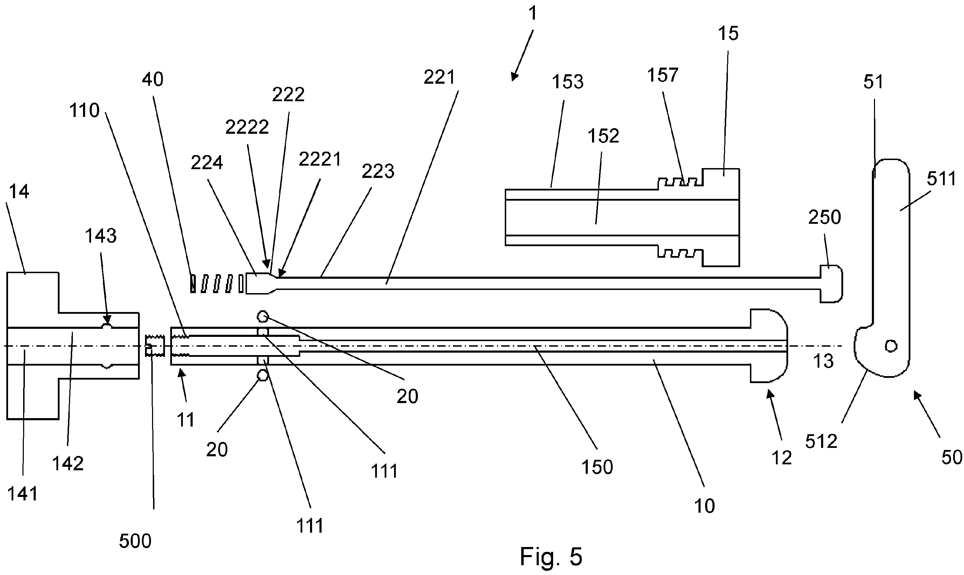

A quick release system 1 for a wheel 31 to be held between two blades 35, 36 of a fork 30 is schematically shown in figure 1. In figure 2, the same quick release system 1 is shown in open status. Figure 3 shows the elements of this quick release system with wheel of figures 1 and 2. Figures 4a, 4b provide details of this quick release system 1 in closed and open status. Figure 5 is an exploded view of this quick release system 1. Figures 1 to 5 are to be interpreted together.

In the figures 1 to 2, the two blades 35 and 36 are blades of a rear fork 30 of a racing bike. It is clear that this quick release system 1 may also be used for holding a front wheel in the front fork of a racing bicycle, or in any frame of any human and/or electrically powered cycle. The wheel 31 comprises a hub 32. The spokes 335 and a means to hold the spokes, a rim connected to the spokes, a tube on the rim, is referred to by reference 339 and a disc brake is referred to as 338. All these elements a rotatably mounted on the hub by means of suitable bearings 337.

The quick release system 1 comprises a hollow axle 10 adapted to be slid in the hub 32 of a wheel. This axle has a first 11 and a second 12 outer end. At the first outer end 11, a first outer end portion 110 adjacent the first outer end is present. As the axle is hollow, the axles have an inner cavity 150.

At the first 35 of the two blades of the fork, a first coupling means 14 is provided, which coupling means 14 is adapted to couple the quick release system 1 to the first blade 35. The coupling means 14 may be connected to the first blade 35 by e.g. screwing the first coupling means 14 in or to the first blade 35. The first coupling means 14 has a cavity 141 for receiving the first outer end portion 110 of the hollow axle 10. The first outer end portion 110 of the hollow axle 10 snuggly fits in the cavity 141. The cavity 141 has an inner wall 142 which is substantially parallel to the axis 13 of the axle 10.

At the first outer end portion of the hollow axle, two perforations 111 are provided. The perforations 111 are located diametrically opposed in view of the axis 13 of the axle 10. Two locking objects, in this case two balls 20 are mounted inside the cavity 150 of the hollow axle such that the balls can extend partially and in radial direction, each ball through one of the perforations 111. It is clear that also only one, or more than two balls may be used. Preferably, at least the same number of perforations are provided as the number of balls used. Preferably, the same number of perforations are provided as the number of balls used. Optionally, also other locking objects may be used, e.g. capsule shapes, ellipsoids, almond shapes, or ovals or alike.

The quick release system 1 further comprises a blocking means 22 at the inner side of the cavity 150 of the axle 10. This blocking means 22 can be operated from the second outer end 12 of the axle 10. The blocking means may be moved in axial direction of the axle 10 and is adapted to force the balls 20 in radial direction into the perforations. The wall 142 of the cavity 141 of the first coupling means comprises a recess 143 for receiving the part of the balls 20 extending through the perforations. This recess may be a radial notch around the axis of the cavity 141 in the wall 142 of the cavity 141. The notch may have a cross section being a circular segment, the diameter of the circular segment being substantially identical to the diameter of the balls 20.

The blocking means 22 in this embodiment comprises a rod 221 positioned in the cavity 150 of the axle 10 and extending from the first outer end portion 110 beyond the second end 12 of the axle 10. The rod is provided at the second end with a thickened part, which serves as a push button 250, to push the rod in axial direction from the second to the first outer end of the axle. The rod 221 at the first outer portion 11 of the axle 10, has an outwards inclined surface portion 222 adapted to push the balls 20 outwards the cavity of the axle 10 into the perforations 111, and the extending part of the balls 20 into the recess 143 in the wall 142 of the cavity 141, when the rod 221 is moved in axial direction relative to the axle from the first to the second outer end of the axle. The rod 221 has a first portion 223, which is connected to the top 2221 of the inclined surface portion 222 and has the same radial cross section of the inclined surface portion at the top of the inclined surface portion. The rod 221 has a second portion 224, which is connected to the foot 2222 of the inclined surface portion 222 and has the same radial cross section of the inclined surface portion at the foot of the inclined surface portion. The balls 20, the inner diameter of the circular cavity 150 of the axle, the wall thickness of the axle and the outer diameters of the first 223 and second 224 portion are dimensioned such that, when the quick release system is closed as in figure 1, the balls are positioned in contact with the second portion 224 of the rod, and are pushed in the perforations and extend out of the perforations into the recess in the wall of the first coupling means. The rod 221 may have a substantially circular radial cross section along the part between push button and the top of the top 2221 of the inclined surface portion 222. The rod 221 may further have a substantially circular radial cross section along the inclined surface portion 222 and the second portion 224. Alternatively, but not shown in the figures, the inclined surface portion 222 may be provided as two fins extending in radial direction outwards, which may end in two raised portions. These two fins may slide in, and optionally snuggly fit into, two axial recesses in the cavity 150 of the hollow axle. The cavity 150 of the hollow axle 10 may have a reduced dimension along the first portion 223 of the rod, causing the first portion of the rod snuggly fitting in the cavity 150. At the part of the axle where the second portion 224 and the inclined surface portion 222 of the rod 221 may be present, the cavity 150 is wide enough to allow the rod to move in axial direction.

The quick release system further comprises a pretensioning means, in this embodiment a spring 40. The spring 40 is positioned at the end of the rod 221, between the end of the rod and the closure of the first coupling means 14 (not shown in the figures) or to a set screw 500 at the end of the cavity of the hollow axle. This set screw 500 is preferred as it allows the force of the spring to be tuned by adjusting the axial position of the face the spring presses to. The axle 20 hence is an axle which has a cavity 150 extending all thought the axle along its axis 13 between the two outer ends 11 and 12. The spring 40 pushes to the end of the rod, such that the rod 221 is moved to the position in which the rod 221 forces the balls in radial direction into the perforations. This means that the spring in not compressed when the quick release system is opened as in figure 2 but is tensioned and pushed the rod 221 towards the second end of the axle, when the quick release system is closed as shown in figure 1.

The quick release system comprises a second coupling means 15 adapted to couple the system to the second 36 of the two blades of the fork. The second coupling means 15 has an orifice 151 for passing the hollow axle 10 through the second coupling means. The wall 152 of the orifice 151 of the second coupling means 15 is substantially parallel to the axis of the axle. The second coupling means 15 is connected to the blade 36 by a screw thread 157 adapted for cooperating with a tread 160 in an orifice in the second blade 36. A shifting means 156 to shift the position of the second coupling means in axial direction of the axle in view of the second blade is provided. This may be realised by the provision of an axle which has an outer perimeter being noncircular, e.g. hexagonal.

The second coupling means 15 comprises a first portion 153 extending inside the fork of the bicycle which portion 153 may carry a cassette 154. This cassette 154 may be carried via a bearing 1541, such that the cassette may rotate around the first portion 153 extending inside the fork of the bicycle. The cassette 154 comprises a connection means 155, at the side of the cassette oriented to the wheel to be carried, to allow the cassette to connect to this wheel positioned on a hub. The shifting means 156 shifting the second coupling means in axial direction of the axle in view of the second blade may bring the connection means 155 in contact with a cooperating connection means on the side of the wheel positioned on a hub. This axial movement may be realised by rotating the axle, thereby moving the screw thread 157 relative to the thread 160. Alternatively, in particular when a circular axle is used, this movement may be realised by providing blades of a fork which are spring-loaded toward the wheel carried, when the quick release system is closed. Opening the quick release system will relieve the spring-load and move the two blades away from each other outwards the bicycle. As such the connection between cassette and wheel may be interrupted. As a mere example, the connection between cassette and wheel may be realised by a rachet wheel, usually positioned on the wheel, cooperating with pawls, which are positioned at the side of the cassette.

The quick release system 1 comprises a retention means 50 to retain the axle in the first and the second coupling means once inserted. This retention means 50 comprises an eccentric cam clamping lever 51. Closing the quick release system 1 to the position as shown in figure 1, cause the eccentric clamp lever 51 to push to the second coupling means, pulling the axle towards this second coupling means. As the rod is also pushed towards this side, the balls are forced through the perforations into the recess in the wall of the first coupling means. This cause the axle to be blocked in the cavity of the first coupling means and cause the axle to stay in position.

Starting from a closed position of the quick release system 1 as shown in figure 1, the axle 10 hence is blocked in the cavity 141 of the first coupling means 14, and is kept in position by the balls 20, resting on the second , less lean or raised portion 224 of the rod, extending through the perforations 111 in the recess 143 of the wall 142 of the cavity 141 of the first coupling means 14, due to the force exercised on the balls 20 by the rod 221, which itself is pushed axially towards the second coupling means by the spring 40.

As a mere example, the first 14 and second 15 coupling means are provided from 40 steel. Alternatively the second coupling means may be provided from e.g. aluminium. The hollow axle 40 may have a circular or noncircular, e.g. hexagonal outer cross section. The diameter of the outer cross section of the axle (for non-circular cross sections this is the diameter of the smallest circle encompassing the cross section) may be in the range of 8mm to 40mm, e.g. about 14mm. The wall thickness of the axle may be in the range of 1mm to 4mm, such as about 3mm. The hollow axle is preferably provided from steel, e.g. 40steel. The inner cavity of the hollow axle is preferably circular, having a diameter of about 8mm. The length of the hollow axle, i.e. the distance between the outer ends, is about 135mm to 145mm for a rear wheel of a racing bike, and 100 mm for a front wheel of a racing bike. The rod 221 has a length of about 110mm or about145mm, and may be extending about 10 mm out of the second outer end of the axle 20.the length of the spring may be about 10mm, allowing about 5mm to be compressed. Hence the rod may move in axial direction of the axle over about 5mm. Possibly, but not shown in the figures, the end of the rod may be positioned sunken in the second coupling means. The rod has a circular diameter in the first portion 223 of about 6 to 7mm, and a circular cross section at the second part 224 of about 8mm, being about identical to the inner diameter of the cavity of the hollow axle. The inclined section of the rod is cone-shaped, and the flank of the cone has an angle of about 20° to 70°, e.g. about 30°, with the axis of the axle. The rod is provided from steel, e.g. 40steel. The push button may be provided removable from the rest of the rod, e.g. the push button may be screwed on the rod by internal screw thread in a cavity in the button, and external screw thread on the rod. The balls may be steel balls having a diameter of about 3 to 4mm, e.g. 3mm. The perforations in the wall of the axle may have a diameter of about 2.5mm to 3.25mm, e.g. 2.5mm. The recess in the wall of the first coupling means may have a cross section of a circle segment, this segment having a diameter about identical to the diameter of the balls, and a sagitta of about 0.2 to 0.5mm. The spring may be a spring from spring steel.

To open the quick release system 1 as shown in figure 1, in order to bring it to the open position as shown in figure 2, a sequence of actions need to take place. As a first step, the retention means 50 is to be opened, in this embodiment by rotating the handle 511 of the eccentric clamp lever 51 by 180° around the axis of rotation of the eccentric of the eccentric clamp lever 51. The pressure applied by the eccentric 512 is removed from the axle. However after this action, the rod 221 is still pushed towards the second coupling means 15 in axial direction 13, hence the balls 20 stay in place in the perforations 111 and in the recess 143 in the wall 142 of the cavity 141 of the first coupling means 14. Hence when this action occurs accidentally while using the bicycle, the wheel is not loosened. Next the second coupling means is rotated a bit, e.g. between about 90° and about 180° around the axis 13 of the axle 20. As such the connection means 155 on the cassette, being in contact with a cooperating connection means on the side of the wheel positioned on a hub, is opened. Still the axle 20 remains fixed in the two coupling means. in case a circular hollos axle is used in combination with spring-loaded blades, this rotation is not necessary to open the contact between cassette and wheel. In a third step, the rod 221 is pushed in axial direction towards the first coupling means 14. The balls 20 now come into contact with the leaner portion of the rod 221, i.e. the first 223 portion of the rod 221. The balls, which still may be partially extend into the perforation of the axle, no longer extend into the recess 143. This cause the axle 20 to be loosened. This is shown in figure 2. The axle can now be pulled towards the second coupling means, out of the cavity of the first coupling means and out of the hub 32 of the wheel 31. The wheel can be taken from between the blades, and a new wheel may be positioned between the blades. The disc brake 38 is removed and replaced as well, as this is an entire part of the wheel. The fact the retention means 50 is to be opened after which the rod is to be pushed in one direction, the axle to be pulled out in the opposite direction, provides a safe and substantially failure free quick release system.

After a new wheel is positioned between the blades, the axle is shifted though the hub and into the first coupling means. The provision of the spring 40 cause the rod to be pushed towards the second coupling means in the hollow axle, and the balls 20 are moved back to the second portion 224, hence they are pushed into the perforations 111 and back into the recess 143. No manipulation of the rod needs to be made. By screwing back the axle over 90° to 180°, and closing the eccentric cam lever 51, the new wheel is positioned, and the cassette is coupled the wheel. These actions need only one hand from the cyclist or the technician replacing the wheel. These actions also take only few second, when well-trained about 5 to 10 seconds, to be performed and avoid the need of any external tool to release, remove, replace and connect the wheel in the fork. As the cassette may remain in place, the wheel replaced may be used as a front or as a rear wheel. hence during e.g. cycling races, only one type of wheel needs to be taken along by the technicians.

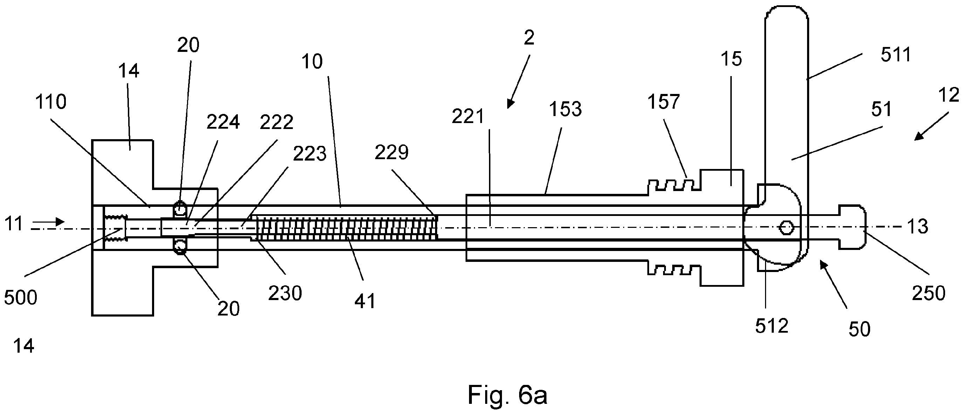

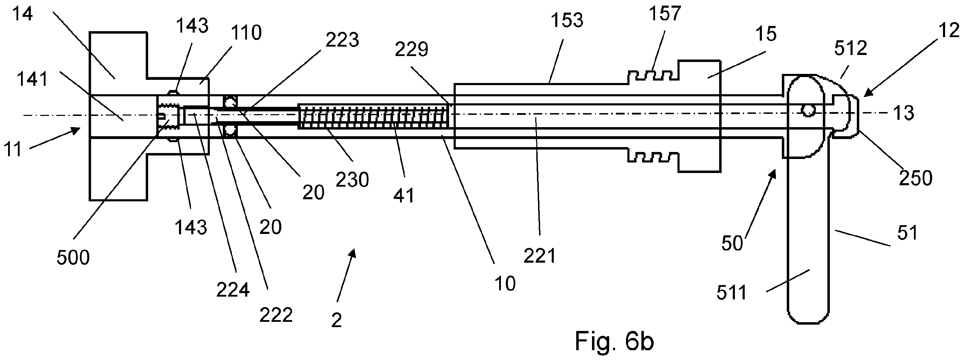

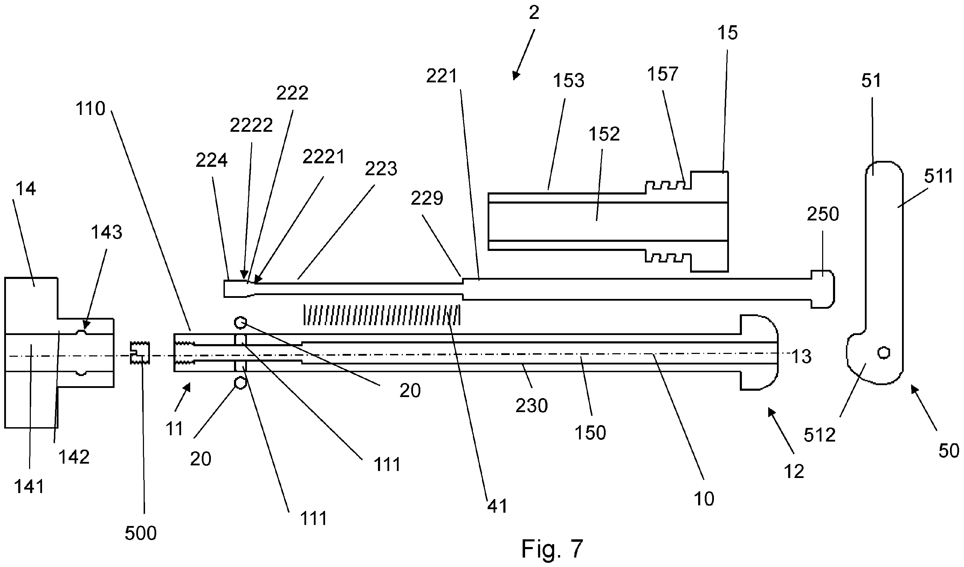

As a mere alternative quick release system 2, details are shown in figures 6a and 6b, an exploded view being provided in figure 7. Figures 6a, 6b and 7 are to be interpreted together. The same references refer to the same features as in figures 1 to 5.

In this embodiment, the pretensioning means is in this embodiment a spring 41 which is positioned between the first part of the rod 221 and the inner wall of the cavity of the hollow axle. The hollow axle 20 has a recessed part 230 along its wall where the cavity is larger. The recess is adapted to receive the spring 41. The rod has a bulge or radial flank 229 along the first portion 223 to receive one end of the spring 41. The bulge or radial flank is positioned between the inclined portion of the rod and the end of the rod oriented to the second coupling means. One end of the spring pushes to the bulge towards the second coupling means. The other end of the spring 41 pushed to the end of the recessed part 230 of the cavity. As such, the spring is positioned such that the rod 221 is moved to the position in which the rod 221 forces the balls in radial direction into the perforations. This means that the spring in not compressed when the quick release system is opened as in figure 6b but is tensioned and pushed the rod 221 towards the second end of the axle, when the quick release system is closed as shown in figure 6a.

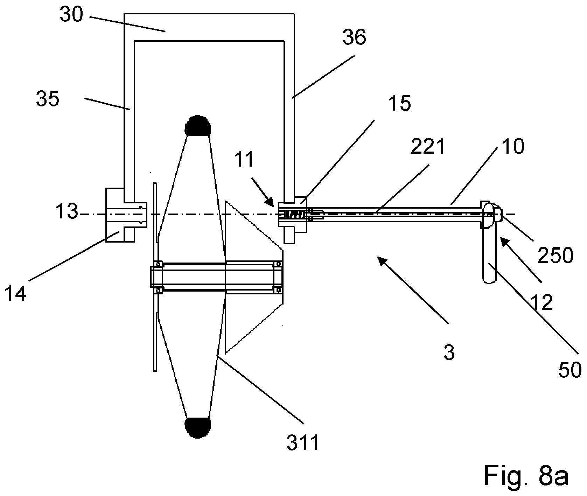

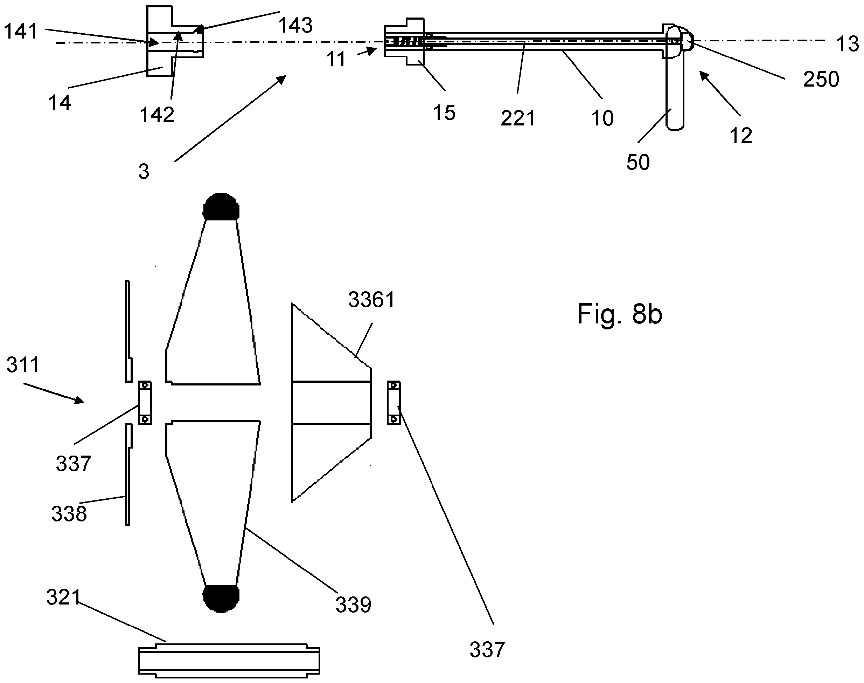

A further alternative quick release system 3 is shown in figures 8a and 8b. The quick release system 3 is entirely identical to the quick release system 1 or 2, except that the second coupling means 15 has no first portion extending inside the fork of the bicycle for carrying a cassette. The second coupling means may be coupled to the blade 36 by screwing or by means of a thread on the outer side of the second coupling means, cooperating with an inner tread in an orifice in the blade 36. The wheel 311 in this case has all similar parts as wheel 31, except that the hub 321 is longer and carries the cassette 3361, which directly connects to the other parts of the wheel as known in the art. the frame 30 has blades which are spring-loaded inwards the frame when the quick coupling means is in locked or closed position. Upon opening the quick release system as set out above, the blades will open outwards and hence disengage the two coupling means 14 and 15 from the wheel 321. A quick replacement of the wheel 321 may be realised in the same way as set out for the quick release systems 1 and 2.

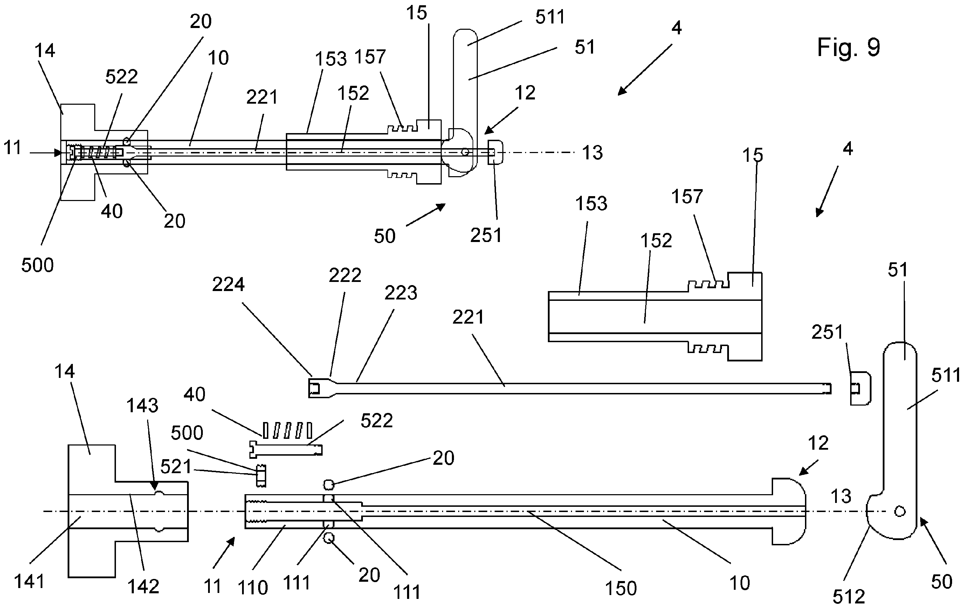

A further alternative quick release system 4 is shown in figure 9. The quick release system 4 is entirely identical to the quick release system 1 or 2, except in the feature that the axle 20 is closed at its first outer end by a set screw 500 in which a perforation 521 is provided. This set screw 500 has the same function as in quick release system 1, 2 or 3. A further set screw 522 to connect to and in the outer end of the rod 221 through the open space inside spring 40. This connection may be realised by cooperating screw threads. By setting the length of the set screw 522 extending out of the axles first outer end 11, the movement of the rod in a direction towards the second outer end of the axle may be limited. This feature can be implemented in the quick release systems 1 and 2 as well.

As an alternative, not shown in the figures, the axle may be a hollow axle with a closed cavity, closed by a bottom present behind the perforations and still allowing the rod to move in a part of the cavity after these perforations. The bottom of the cavity is provided with a small perforation which allows a set screw, similar or identical to set screw 522, to connect in the outer end of the rod through the open space inside spring. By setting the length of the set screw extending out of the axles first outer end, the movement of the rod in a direction towards the second outer end of the axle may be limited. This feature can be implemented in the quick release systems 1 and 2 as well.

The quick release system 4 further differs from the quick release system 1 or 2, in the feature that the rod 221 is provided with a button 251 at the outer end of the rod 221, which button 251 removably connected to the rod 221 by an external screw thread on the rod, cooperating with as screw thread in a cavity in the button 251. This feature can be implemented in the quick release systems 1, 2 and 3 as well, even in case an open axle is used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. When reference is made to a range, the range is to be understood inclusive, except when otherwise indicated. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A quick release system (1, 2, 3) for a wheel (31, 311) to be held between two blades (35, 36) of a fork (30), said system comprising a
• a hollow axle (10) adapted to be slid in the hub ( 32) of a wheel, said axle having a first (11) and a second (12) outer end and a first outer end portion (110) adjacent the first outer end;
• a first coupling means (14) adapted to couple said system to a first (35) of the two blades of the fork, the first coupling means having a cavity (141) for receiving the first outer end portion of the hollow axle;
• at the first outer end portion of the hollow axle, at least one perforation (111) is provided, at least one locking object (20) is mounted inside the cavity (141) of the hollow axle such that said locking object can extend partially and in radial direction through said at least one perforation;
• a blocking means (22) being provided inside said cavity of said axle, said blocking means being adapted to be operated from the second outer end of the axle moving the blocking means in axial direction, and adapted to force the at least one locking object in radial direction into said at least one perforation;
• said cavity of said first coupling means having a wall (142) , said wall comprising a recess (143) adapted to receive the part of the locking object extending through said at least one perforation in the axle.

2. A quick release system according to claim 1, wherein the locking object (20) is a ball.

3. A quick release system according to any one of the claims 1 to 2, wherein the radial cross section of the recess in the wall of the cavity of the first coupling means, sectioned according to a plane parallel and comprising the axis (13) of the axle, has the shape of a circle segment.

4. A quick release system according to any one of the claims 1 to 3, wherein the quick release system comprises a second coupling means (15) adapted to couple the system to a second (36) of the two blades of the fork, the second coupling means having an orifice (151) for passing the hollow axle through the second coupling means.

5. A quick release system according to claim 4, wherein the wall (152) of the orifice of the second coupling means is substantially parallel to the axis of the axle.

6. A quick release system (1, 2) according to any one of the claims 4 to 5, wherein the second coupling means (15) comprises a first portion (153) extending inside the fork of the bicycle, said first portion (153) carrying a cassette (154).

7. A quick release system according to claim 6, wherein the cassette (154) comprises a connection means (155) to allow the cassette to connect to a wheel positioned on a hub.

8. A quick release system according to any one of the claims 6 to 7, wherein the second coupling means (15) comprises a shifting means (156) to shift the position of the second coupling means in axial direction of the axle in view of the second blade.

9. A quick release system according to claim 8, wherein the second coupling means comprises a screw thread (157) adapted for cooperating with a tread (160) in the second blade, the second coupling means adapted to be rotated by rotating the axle, the axle having a non-circular radial cross section.

10. A quick release system according to any one of the claims 1 to 9, wherein the quick release system comprises a retention means (50) adapted to retain the axle in the first and optionally the second coupling means once inserted.

11. A quick release system according to claim 10, wherein the retention means (50) comprises an eccentric cam clamping lever (51).

12. A quick release system according to any one of the claims 1 to 11, wherein the blocking means (22) comprises a rod (221) positioned in the cavity (141) of the axle (10) and extending from the first outer end portion (110) beyond the second end (12) of the axle, said rod, at the first outer portion of the axle, having at least a first outwards inclined surface portion (222) adapted to push the locking object outwards the cavity of the axle into the perforation when said rod is moved in axial direction relative to the axle.

13. A quick release system according to claim 12, wherein the rod (221) has a first portion (223), the first portion of the rod being connected to the top (2221) of the inclined surface portion (222) and having the same radial cross section of the inclined surface portion at the top of the inclined surface portion.

14. A quick release system according to any one of the claims 1 to 13, wherein quick release system comprises a pretensioning means (40, 41) adapted to move the blocking means (22) to the position in which the blocking means forces the at least one locking object in radial direction into said at least one perforation.

15. the use of a quick release systems (1, 2, 3) according to any one of the preceding claims to hold a wheel in a frame of a human and/or electrically powered cycle.
